# NEUE EUROPÄISCHE PATENTSCHRIFT

(11) **EP 1 068 943 B2**
(45) Veröffentlichungstag und Bekanntmachung des Hinweises auf die Entscheidung über den Einspruch: **13.02.2008**
(45) Hinweis auf die Patenterteilung: 01.10.2003
(21) Anmeldenummer: 00890212.4
(22) Anmeldetag: 06.07.2000
(51) Int. Cl.: B29C 44/08, B29C 44/34

(54) **Verfahren und Vorrichtung zum mehrfachen Schäumen von expandierbaren Kunststoffen**
Method and apparatus for multiple foaming of expandable plastics
Méthode et appareil pour le moussage en plusieurs étapes de matière synthétique expansible

(30) Priorität: 13.07.1999 AT 47799
(43) Veröffentlichungstag der Anmeldung: 17.01.2001
(73) Patentinhaber: Hirsch Maschinenbau GmbH & Co.KG., 9555 Glanegg (AT)
(72) Erfinder: Stampfer, Hans Reiner, 9523 Landskron (AT)
(74) Vertreter: Miksovsky, Alexander

(56) Entgegenhaltungen:
- EP-A- 0 856 547
- US-A- 3 347 961
- US-A- 3 378 245
- US-A- 5 830 922
- Kunststoffe, Band 71, Nr. 10, Seiten 769-774, 1981
- Übersetzung "Prefoaming of expandable polysterene" aus Plasty a Kaucuk, No. 6, p. 173, 1994. J. Meloun und F. Voros, durch P. Hinchliffe in International Polymer Science and Technology, Vol. 21, No. 8, TSU-T60, 1994
- Technische Information Styropor TI0-540 d, 81944 August 1990 der BASF

## Beschreibung

Die vorliegende Erfindung bezieht sich auf ein Verfahren zum mehrfachen Schäumen von expandierbarem Polystyrol zu Schaumpartikeln mit niedriger Schüttdichte sowie auf eine Vorrichtung zur Durchführung des Verfahrens.

Im Zusammenhang mit einem Schäumen von expandierbaren Kunststoffen, beispielsweise EPS, EPE, EPP oder Polymergemischen, ist es bekannt, derartige Kunststoffe in kontinuierlichen oder diskontinuierlichen bzw. chargenweisen Schäumvorgängen in einer Stufe bzw. einem Verfahrensschritt auf verschiedene, gewünschte Schüttdichten zu schäumen, wie dies beispielsweise der US-A 3 378 245 zu entnehmen ist. Bei Durchführung eines einzigen Schäumvorganges bzw. Vorsehen einer einzigen Schäumstufe ist es hiebei lediglich möglich, eine limitierte Schüttdichte zu erreichen. Der expandierbare Kunststoff besteht aus einem thermoplastischen Kunststoff und einer eingelagerten, niedrig siedenden Kohlenwasserstoff-Verbindung als Treibmittel, wobei beim Erwärmen, beispielsweise durch Zufuhr von Wasserdampf zum Aufschäumen, nicht nur der expandierbare Kunststoff erwärmt wird, sondern unter Ansteigen des Dampfdrucks des Treibmittels eine Vergrößerung des Volumens und derart eine entsprechend niedrige Schüttdichte erzielt wird.

Für den Fall, daß niedrigere Schüttdichten, als in einem einzigen Schäumvorgang erzielbar sind, erreicht werden sollen, ist es darüber hinaus bekannt, ein Nachschäumen von bereits vorgeschäumtem, gegebenenfalls abgelagertem Material in wenigstens einem weiteren Schritt durchzuführen, wobei für ein derartiges Nachschäumen kontinuierliche Schäumvorgänge bzw. Schäumeinrichtungen bekannt sind, um die gewünschten, niedrigeren Schüttdichten zu erzielen. Ein derartiges mehrstufiges Schäumen für aus Polyolefinharzen bestehenden Kunststoffen ist beispielsweise aus der US-A 5 830 922 oder der EP-A 0 856 547 bekannt. Bei einem Schäumen von Polyolefinen ist im Gegensatz zu einem Schäumen von Polystyrol zu beachten, daß eine überaus langwierige und aufwendige Behandlung erforderlich ist, so daß üblicherweise derartige Kunststoffe bereits bei der Herstellung auf ihr endgültiges Volumen geschäumt werden müssen, so daß ein großer Lager- und Transportaufwand resultiert. Ein entsprechend langwieriges und zeitaufwendiges Verfahren zum Schäumen von Kunststoff ist weiters der US-A 3 347 961 zu entnehmen.

Aus "Verarbeitung von schäumbarem Polystyrol (EPS)", F. Heck, Kunststoff 71 (1981), 10, Seiten 769 bis 774, ist es bekannt, unter Verwendung eines gegebenenfalls mehrstufigen Schäumverfahrens expandierbares Polystyrol mit niederiger Schüttdichte zur Verfügung zu stellen. Ein derartiger mehrstufiger Schäumvorgang kann in kontinuierlichen Schäumprozessen vorgenommen werden, wobei auch ein diskontinuierlicher Schäumvorgang vorgeschlagen wird. Die Temperaturer für das Schaümen bzw. Nachschaümer werden und "um 100°C" und mit "100 bis 120°C" angegeben. Aus "Pre-foaming of expendable PS", übersetzt aus Plasty a Kaucuk, Nr. 6, 1994, Seite 173, T/54 bis T/60, F. Voros und J. Meloun, ist ein ebenfalls mehrstufiger Schäumvorgang für expandierbares Polystyrol unter Einsatz von kontinuierlichen Schäumverfahren bekannt, während ein diskontinuierliches Schäumverfahren lediglich in einer einstufigen Ausführungsform vorgeschlagen wird. Darüber hinaus ist beispielsweise aus Technische Information Styropor TI 0-540 d., 81944, August 1990, BASF, bekannt, ein Rohmaterial, insbesondere Polystyrol, vor einem ersten Schäumvorgang abzuwiegen.

Im Zusammenhang mit Verfahren zum Schäumen von expandierbaren Kunststoffen existieren jedoch aufgrund von zunehmend verschärften Umweltschutzbestimmungen zum Teil restriktive Auflagen betreffend den Treibmittelgehalt von expandierbaren Kunststoffen bzw. betreffend den nach Durchführung eines gegebenenfalls mehrstufigen Schäumvorgangs abgebbaren Treibmittelgehalt im Abgas. Für die Durchführung von kontinuierlich arbeitenden Schäumvorgängen ist jedoch allgemein ein vergleichsweise hoher Treibmittelanteil bzw. Treibmittelgehalt erforderlich, so daß selbst bei mehrfachen Schäumvorgängen im Rahmen eines abschließenden, kontinuierlichen Nachschäumvorgangs gegebenenfalls gewünschte, sehr niedrige Schüttdichten nicht erzielbar sind bzw. aufwendige und umfangreiche Zusatzeinrichtungen betreffend die Reinigung von aus den Schäumvorgängen abgezogenen Abgasen erforderlich sind.

Die vorliegende Erfindung zielt nun darauf ab, ein Verfahren sowie eine Vorrichtung zum Mehrfachschäumen bzw. Nachschäumen von expandierbarem Polystyrol (EPS) gemäß der eingangs genannten Art zur Verfügung zu stellen, mit welchen es gelingt, gezielt sehr niedrige Schüttdichten selbst unter Einhaltung von strengen Umweltschutzauflagen zu erzielen.

Zur Lösung dieser Aufgaben wird ein Verfahren gemäß Anspruch 1 zur Verfügung gestellt. Bevorzugte Ausführungsformen sind Gegenstand der abhängigen Unteransprüche. Dadurch, daß erfindungsgemäß als abschließendes Nachschäumen ein diskontinuierliches bzw. chargenweises Schäumen durchgeführt wird, gelingt es, mit vergleichsweise geringeren Treibmittelgehalten das Auslangen zu finden, so daß strenge Umweltschutzauflagen betreffend den Treibmittelanteil von aus einem derartigen diskontinuierlichen bzw. chargenweisen Schäumvorgang abgezogenen Gasen ohne weiteres erfüllt werden können. Darüber hinaus gelingt es, durch Einsatz eines derartigen diskontinuierlichen bzw. chargenweisen Nachschäumens auch sehr niedrige Schüttdichten, insbesondere bedeutend niedrigere Schüttdichten als bei einem kontinuierlichen Nachschäumen, zu erzielen, wobei ein derartiges diskontinuierliches bzw. chargenweises Nachschäumen auch mit genau einstellbaren Verfahrensparametern in bezug auf die zu erzielende Schüttdichte und auch für große Volumina in kurzer Zeit durchgeführt werden kann.

Zur Erzielung des gewünschten Endprodukts bzw. der gewünschten Schüttdichte wird darüber hinaus vorgeschlagen, daß das abschließende Nachschäumen durch Einbringen von Wasserdampf, gegebenenfalls unter Zusatz von Luft, unter einem Druck von 1 bar bis 7 bar, insbesondere etwa 1,05 bar bis 2 bar, bei einer Temperatur von 75 °C bis 160 °C, insbesondere etwa 100 °C, durchgeführt wird. Durch Einhalten der erfindungsgemäß angegebenen Parameter betreffend Druck und Temperatur für das Nachschäumen läßt sich in kurzer Zeit eine gewünschte niedrige Schüttdichte selbst für große Füllmengen sicherstellen, wobei beispielsweise Sattdampf oder leicht überhitzter Dampf eingesetzt wird.

Für ein rasches Einbringen großer Füllmengen von bereits vorgeschäumtem Material zur Durchführung des Nachschäumvorganges ist weiters vorgesehen, daß das vorgeschäumte Material in einen Behälter für das Nachschäumen unter Verwendung eines geschlossenen Fluidförderkreislaufes eingebracht wird. Ein derartiges Einbringen unter Verwendung eines geschlossenen Fluidförderkreislaufes erlaubt kurze Befüllzeiten eines Behälters für das diskontinuierliche bzw. chargenweise Nachschäumen, wobei durch ein Gebläse in diesem geschlossenen Fluidförderkreislauf gleichzeitig ein Blasen und Saugen erfolgt.

Wie oben bereits angedeutet, ist es aufgrund strenger werdender Umweltschutzbestimmungen erforderlich, daß der in den Abgasen aus der Schäumstufe enthaltende Treibmittelgehalt auf vorgegebene, maximale Grenzwerte reduziert wird.

Für eine einfache Herabsetzung des aus dem Schäumbehälter abzugebenden Abgases bzw. des darin enthaltenen Treibmittels wird weiters vorgeschlagen, daß aus der abschließenden Nachschäumstufe abgezogenes Abgas wenigstens teilweise zum Fördern des vorgeschäumten Materials in die Nachschäumstufe rezykliert wird. Derart kann gezielt ein innerhalb der erlaubten Grenzwerte liegender Treibmittelgehalt an die Umwelt abgegeben werden bzw. es kann mit kleiner dimensionierten und derart einfacheren Abgasreinigungsanlagen das Auslangen gefunden werden.

Zur Erzielung bzw. Einhaltung von genau definierbaren Schüttdichten nach Abschluß des Nachschäumvorganges im wesentlichen unabhängig von der Schüttdichte des wenigstens einmal vorgeschäumten Materials wird gemäß einer weiteren bevorzugten Ausführungsform des erfindungsgemäßen Verfahrens vorgeschlagen, daß das vorgeschäumte Material vor dem Einbringen in das abschließende Nachschäumen einem Wägeverfahren unterworfen wird. Durch Vorsehen eines derartigen Wägeverfahrens kann somit exakt abgestimmt auf die zu erzielende Schüttdichte und unabhängig von der Schüttdichte des vorgeschäumten Materials eine entsprechende genau bestimmte Menge des wenigstens einmal vorgeschäumten Materials für das abschließende, diskontinuierliche bzw. chargenweise Nachschäumen bereitgestellt werden, so daß nach Abschluß des Nachschäumvorganges eine entsprechend exakt erzielte Schüttdichte sichergestellt wird.

Zur Erzielung eines homogen aufgeschäumten Endprodukts bzw. eines Produkts mit homogener Schüttdichte wird darüber hinaus bevorzugt vorgeschlagen, daß das Material während des Nachschäumens unter kontinuierlicher Zufuhr von Wasserdampf gerührt wird.

Zur Lösung der Aufgaben zur Durchführung des Verfahrens wird weiters eine Vorrichtung gemäß Anspruch 4 vorgeschlagen. Derart läßt sich mit einer einfachen Konstruktion das erfindungsgemäß vorgesehene, diskontinuierliche bzw. chargenweise Nachschäumen durchführen, wobei in diesem Zusammenhang im wesentlichen ein bekannter Schäumbehälter für ein diskontinuierliches bzw. chargenweises Schäumen mit lediglich geringfügigen Modifikationen, welche dem Einsatzzweck des erfindungsgemäßen Schäumbehälters für ein abschließendes Nachschäumen entsprechen, einsetzbar ist. Zur Erzielung von entsprechend niedrigen Treibmittelgehalten im Abgas ist erfindungsgemäß weiters vorgesehen, daß an den Schäumbehälter eine Rezyklierleitung für aus dem Schäumbehälter abgezogenes Abgas für eine wenigstens teilweise Rückführung des Abgases zu dem Schäumbehälter über das Gebläse unter Ausbildung eines geschlossenen Förderkreislaufes zum Einbringen des vorgeschäumten Materials angeschlossen ist. Durch eine derartige, wenigstens teilweise Rückführung kann nicht nur mit entsprechend geringen, zusätzlich zuzuführenden Gasmengen für ein Einbringen des geschäumten Materials in den Schäumbehälter das Auslangen gefunden werden, sondern es kann auch eine übermäßige Umweltbelastung vermieden werden. In diesem Zusammenhang wird darüber hinaus vorgeschlagen, daß der Schäumbehälter neben einer an sich bekannten Zufuhröffnung für Wasserdampf, einer Austragsleitung für das aufgeschäumte Material und wenigstens einer Abzugsöffnung für Abgas mit einer tangential angeschlossenen Einblasöffnung für das vorgeschäumte Material und mit einem Sieb im Oberteil des Schäumbehälters ausgebildet ist, wie dies einer weiters bevorzugten Ausführungsform der erfindungsgemäßen Vorrichtung entspricht. Durch Vorsehen einer tangential angeschlossenen Einblasöffnung für das vorgeschäumte Material mit zusätzlich einem Sieb im Oberteil des Schäumbehälters läßt sich ein rasches Füllen des Schäumbehälters mit dem bereits vorgeschäumten Material, welches bereits ein vergleichsweise großes Volumen aufweist, in der gewünschten Menge erzielen.

Für eine exakte Dosierung des vorgeschäumten Materials zur Erzielung von einstellbaren, gewünschten Schüttdichten ist gemäß einer weiters bevorzugten Ausführungsform vorgesehen, daß in die Vorrats- bzw. Zufuhreinrichtung eine Wägeeinrichtung für das vorgeschäumte Material integriert ist. Eine derartige Einrichtung kann unmittelbar in der Vorrats- bzw. Zufuhreinrichtung integriert sein, wobei sich durch ein derartiges Wiegen eine entsprechend gute Reproduzierbarkeit des abschließenden Nachschäumvorgangs und der dadurch erzielbaren Schüttdichte ergibt. Der Wägevorgang kann hiebei ebenso wie die weitere Verfahrensführung entsprechend von einer elektronischen Programmablaufsteuerung überwacht bzw. gesteuert werden.

Für ein rasches und zuverlässiges Einbringen des insbesondere vorab gewogenen, vorgeschäumten Materials in den Schäumbehälter wird gemäß einer weiters bevorzugten Ausführungsform vorgesehen, daß an die Vorrats- bzw. Zufuhreinrichtung eine Zellradschleuse angeschlossen ist, und daß für das Einbringen des vorgeschäumten Materials in den Schäumbehälter ein Gebläse vorgesehen ist. Über eine derartige Zellradschleuse läßt sich eine zuverlässige Dosierung aus der Vorrats- bzw. Zufuhreinrichtung nach Passieren der Wägevorrichtung erzielen und durch das Gebläse läßt sich ein entsprechend rasches und sicheres Einbringen des vorgeschäumten Materials in den Nachschäumbehälter durchführen.

Erfindungs gemäß ist darüber hinaus gemäß einer weiters bevorzugten Ausführungsform vorgesehen, daß in einer Abzugsleitung in an sich bekannter Weise eine Abgasreinigungsanlage vorgesehen ist, wobei durch Vorsehen der Rezyklierleitung bzw. des in sich geschlossenen Fluidförderkreislaufes die Abgasreinigungsanlage zur Erzielung der vorgeschriebenen Abgaswerte entsprechend kleiner bzw. einfacher dimensioniert werden kann.

Da das vorgeschäumte Material insbesondere einem Wägevorgang vor dem Einbringen in dem Nachschäumbehälter unterworfen wird, um derart eine exakte Dosierung des vorgeschäumten Materials zur Erzielung einer gewünschten Schüttdichte zu ermöglichen, läßt sich mit einfachen Einrichtungen im Schäumbehälter der Schäumvorgang bzw. das Erreichen der gewünschten Schüttdichte bzw. Volumina durchführen, wobei hiefür vorgeschlagen, daß im Schäumbehälter ein insbesondere höhenverstellbarer Füllhöhensensor bzw. -schalter vorgesehen ist, wie dies einer weiteren bevorzugten Ausführungsform der erfindungsgemäßen Vorrichtung entspricht. Ein derartiger, insbesondere höhenverstellbarer Füllhöhensensor bzw. -schalter ermöglicht beispielsweise durch Verstellung eine einfache Anpassung an zu erzielende Schüttdichten bzw. Volumina, so daß beispielsweise für einen weiten Bereich von zu erzielenden Schüttdichten die zugeführte, insbesondere gewogene Menge des vorgeschäumten Materials im wesentlichen gleich beibehalten werden kann und lediglich durch einfaches Verstellen der Füllhöhensensors bzw. -schalters eine exakte Anpassung an die gewünschte Schüttdichte in engen Toleranzgrenzen erzielbar ist.

Für einen gleichmäßigen Nachschäumvorgang, insbesondere bei einem kontinuierlichen Einblasen von Wasserdampf während des Schäumvorganges, ist darüber hinaus erfindungsgemäß bevorzugt vorgesehen, daß im Schäumbehälter eine Rühreinrichtung integriert ist, wobei durch eine derartige Rühreinrichtung ein homogenes Beaufschlagen des in dem Schäumbehälter befindlichen, nachzuschäumenden Materials durch den eingebrachten Wasserdampf erzielbar ist.

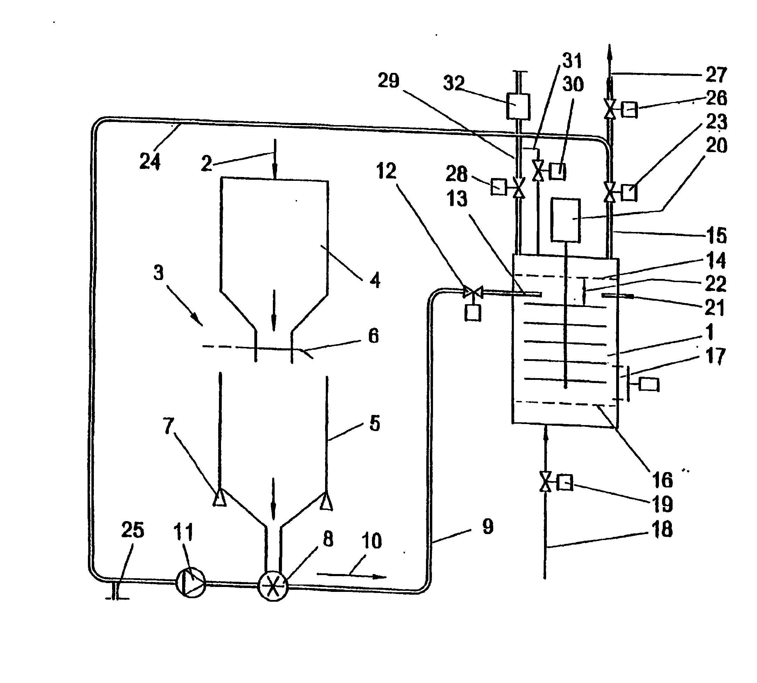

Die Erfindung wird nachfolgend anhand eines in der beiliegenden Zeichnung schematisch dargestellten Ausführungsbeispiels einer erfindungsgemäßen Vorrichtung zur Durchführung des erfindungsgemäßen Verfahrens zum mehrfachen Schäumen von expandierbaren Kunststoffen näher erläutert.

In der Figur ist mit 1 allgemein ein Schäumbehälter zur Durchführung eines abschließenden, diskontinuierlichen bzw. chargenweisen Schäumens eines bereits wenigstens einmal vorgeschäumten, expandierbaren Kunststoffes, wie beispielsweise EPS, EPE, EPP oder Polymergemischen, bezeichnet. Das bereits wenigstens einmal vorgeschäumte Material wird entsprechend dem Pfeil 2 einer allgemein mit 3 bezeichneten Vorrats- bzw. Zufuhreinrichtung zugeführt, wobei die Vorrats- bzw. Zufuhreinrichtung aus einem mit 4 bezeichneten Dosiersilo und einer nachgeschalteten, mit 5 bezeichneten Wägeeinrichtung besteht. Im Bereich der Austragsöffnung aus dem Dosiersilo 4 ist schematisch eine Dosiereinrichtung 6, welche beispielsweise elektronisch gesteuert ist und von einem Grob- und Feindosierungsschieber gebildet wird, vorgesehen, wobei über diese Dosiereinrichtung 6 das vorgeschäumte Material der Wägeeinrichtung 5 zugeführt wird, wobei die Wägeelemente schematisch mit 7 angedeutet sind. Am Austrag der Wägeeinrichtung 5 ist eine mit 8 bezeichnete Zellradschleuse vorgesehen, welche in eine Zufuhrleitung 9 zum Transport des gewogenen, vorgeschäumten Materials aus der Wägeeinrichtung 5 entsprechend dem Pfeil 10 in dem Schäumbehälter 1 mündet, wobei das vorgeschäumte Material unter Einsatz eines Gebläses 11 in den Nachschäumbehälter 1 eingebracht wird, wobei zusätzlich ein Sicherheitsventil 12 unmittelbar dem Schäumbehälter 1 vorgeschaltet ist.

Für ein rasches und ordnungsgemäßes Befüllen des Schäumbehälters 1 mündet die Leitung 9 in einem tangentialen Einlaufstutzen 13 am Schäumbehälter 1, wobei darüber hinaus im oberen Teil des Schäumbehälters 1 ein Sieb 14 vorgesehen ist, um ein Austreten des vorgeschäumten Materials aus dem Schäumbehälter 1 bzw. ein Eindringen in die Abzugsleitung 15 zu vermeiden. Am Boden des Schäumbehälters 1 ist ein Bodensieb 16 angedeutet, wobei unmittelbar über dem Bodensieb eine Austragsöffnung 17 zum Ausbringen des nachgeschäumten Materials nach Durchführung des diskontinuierlichen bzw. chargenweisen Nachschäumvorgangs vorgesehen ist.

Das diskontinuierliche bzw. chargenweise Nachschäumen erfolgt durch Einbringen von Dampf durch die Zuleitung 18 über einen Regler bzw. ein Ventil 19 im Bodenbereich des Schäumbehälters 1, wobei gleichzeitig während des Einbringens von Dampf ein Rühren des eingebrachten, vorgeschäumten Materials über ein schematisch angedeutetes Rührwerk 20 erfolgt. Das Erreichen der gewünschten Schüttdichte wird durch einen Füllhöhesensor bzw. -schalter 21 überwacht, welcher beispielsweise zur Einstellung unterschiedlicher Schüttdichten oder Volumina insbesondere in Höhenrichtung verstellbar ist, wie dies durch den Pfeil 22 angedeutet ist.

Zur Erzielung der gewünschten Schüttdichte in entsprechend kurzen Zeiträumen wird der Dampf, gegebenenfalls unter Zusatz von Luft mit einem Druck von etwa 1 bis 2 bar sowie einer Temperatur von etwa 75 bis 160 °C eingebracht, wobei die Verweildauer des vorgeschäumten Materials zur Erzielung der gewünschten Schüttdichte etwa 1 bis 2 min im Schäumbehälter 1 beträgt.

Aus dem Schäumbehälter 1 wird über den Abzug 15 zum Aufschäumen eingesetzter, überschüssiger Dampf sowie aus dem aufzuschäumenden Material entweichendes Treibmittel abgezogen, wobei hiefür eine weitere Regel- bzw. Ventileinrichtung 23 vorgesehen ist. An dieses Ventil bzw. den Schieber 23 schließt eine Rezyklierleitung 24 an, welche zu dem Gebläse 11 führt, so daß für das Einbringen des vorgeschäumten Materials in den Behälter 1 insgesamt ein in sich geschlossener Fluidförderkreislauf zur Verfügung steht. Für eine Regelung des Fluids in der Rezyklierleitung 24 ist darüber hinaus ein Ventil bzw. Schieber 26 vorgesehen, welcher in einen Abzug 27 bzw. eine nachgeschaltete Entsorgungsanlage für Treibmittel führt. In diesem Fall wird dem Gebläse 11 vorgeschaltet über eine zusätzliche Luftzufuhröffnung 25 Frischluft zugeführt.

Nach dem Einbringen der Charge in den Behälter 1 werden die Schieber bzw. Ventile 12 und 23 sowie gegebenenfalls 25 geschlossen und es erfolgt das Aufschäumen des eingebrachten Materials mittels Dampf durch Einbringen über die Leitung 18 und das Ventil bzw. den Schieber 19 unter Rühren durch das Rührwerk 20 bis zu einem durch den Schalter 21 festgelegten Niveau.

Während des Bedampfens des in den Behälter 1 eingebrachten Materials bleibt ein Hauptentlüftungsventil 28 in einer Abgasleitung 29 geschlossen und das Abgas wird über ein kleines Bypass-Ventil 30 in einer Bypass-Leitung 31 in die Abgasleitung bzw. den Abzug 29 eingebracht. Aus dem Abzug 29 erfolgt ein Ausbringen in die Atmosphäre oder in eine schematisch mit 32 angedeutete Abgasreinigungsanlage bzw. Treibmittel-Entsorgungsanlage. Nach Erzielen des gewünschten Volumens bzw. der gewünschten Schüttdichte erfolgt ein Ablassen des Druckes im Behälter über den Schieber 28, worauf das aufgeschäumte Material über den Austrag 17 aus dem Behälter 1 entfernt wird und nachfolgend ein neuer Zyklus durch Einbringen von Material aus der Wägeeinrichtung 5 in den Behälter 1 beginnt.

### Ausführungsbeispiel

Vorgeschäumtes Material, beispielsweise EPS mit einer Schüttdichte von 16 kg/m³ wird der Dosiereinrichtung 4 zugeführt und es werden von der Wägeeinrichtung 32 kg des vorgeschäumten Materials abgewogen und in weiterer Folge über die Zellradschleuse 8 in den Nachschäumbehälter 1 eingebracht.

Durch Zufuhr von Wasserdampf mit einer Temperatur von 105 °C und unter einem Druck von 1,2 bar wird nach einer Behandlungs- bzw. Verweildauer von ca. 1 min in dem Schäumbehälter ein Vergrößern des Volumens des eingebrachten, vorgeschäumten Materials auf das Zweifache zur Erzielung einer Schüttdichte von 8 kg/m³ durchgeführt. Es erfolgt ein Rühren des eingebrachten Materials über das handelsübliche Rührwerk 20 mit 30 Umdrehungen pro min bei kontinuierlicher Wasserdampfzufuhr mit einer Rate von 15 m³/min. Es läßt sich in dem Behälter mit einem Nutzvolumen von etwa 4,5 m³ dadurch in einem Nachschäumvorgang ein Nachschäumen eines expandierbaren Kunststoffs durchführen.

## Patentansprüche

1. Verfahren zum mehrfachen Schäumen von expandierbarem Polystyrol (EPS) zu Schaumpartikeln mit niedriger Schüttdichte, wobei in einem ersten Schritt ein Vorschäumen erfolgt und in wenigstens einem weiteren Schritt ein Nachschäumen (1) von bereits vorgeschäumtem Material vorgenommen wird, wobei als abschließendes Nachschäumen (1) ein diskontinuierliches bzw. chargenweises Schäumen unter Nutzung eines Resttreibmittels durchgeführt wird, und das abschließende Nachschäumen (1) durch Einbringen von Wasserdampf, gegebenenfalls unter Zusatz von Luft, unter einem Druck von 1 bar bis 7 bar, insbesondere etwa 1,05 bar bis 2 bar, bei einer Temperatur von 75 °C bis 160°C, insbesondere etwa 100 °C, durchgeführt wird, wobei das vorgeschäumte Material in einen Behälter (1) für das Nachschäumen unter Verwendung eines geschlossenen Fluidförderkreislaufes (9, 15, 24) eingebracht wird, und wobei aus der abschließenden Nachschäumstufe (1) abgezogenes Abgas wenigstens teilweise zum Fördern des vorgeschäumten Materials in die Nachschäumstufe (1) rezykliert wird.

2. Verfahren nach Anspruch 1, wobei das vorgeschäumte Material vor dem Einbringen in das abschließende Nachschäumen einem Wägeverfahren (5) unterworfen wird.

3. Verfahren nach Anspruch 1 oder 2, wobei das Material während des Nachschäumens (1) unter kontinuierlicher Zufuhr von Wasserdampf gerührt wird.

4. Vorrichtung zur Durchführung des Verfahrens nach einem der Ansprüche 1 bis 3, umfassend zumindest eine Vorrats- bzw. Zufuhreinrichtung (3) und einen Schäumbehälter (1) für ein diskontinuierliches bzw. chargenweises Nachschäumen des vorgeschäumten, expandierbaren Polystyrols, wobei an den Schäumbehälter (1) eine Rezyklierleitung (24) für aus dem Schäumbehälter (1) abgezogenes Abgas für eine wenigstens teilweise Rückführung des Abgases zu dem Schäumbehälter (1) über das Gebläse (11) unter Ausbildung eines geschlossenen Fluidförderkreislaufes zum Einbringen des vorgeschäumten Materials angeschlossen ist.

5. Vorrichtung nach Anspruch 4, wobei der Schäumbehälter (1) neben einer an sich bekannten Zufuhröffnung (18) für Wasserdampf, einer Austragsleitung (17) für das aufgeschäumte Material und wenigstens einer Abzugsöffnung (15, 29) für Abgas mit einer tangential angeschlossenen Einblasöffnung (13) für das vorgeschäumte Material und mit einem Sieb (14) im Oberteil des Schäumbehälters (1) ausgebildet ist.

6. Vorrichtung nach Anspruch 4 oder 5, wobei in die Vorrats- bzw. Zufuhreinrichtung (3) eine Wägeeinrichtung (5) für das vorgeschäumte Material integriert ist.

7. Vorrichtung nach Anspruch 4, 5 oder 6, wobei an die Vorrats- bzw. Zufuhreinrichtung (3, 4, 5) eine Zellradschleuse (8) angeschlossen ist und für das Einbringen des vorgeschäumten Materials in den Schäumbehälter (1) ein Gebläse (11) vorgesehen ist.

8. Vorrichtung nach einem der Ansprüche 4 bis 7, wobei in einer Abzugsleitung (29) in an sich bekannter Weise eine Abgasreinigungsanlage (32) vorgesehen ist.

9. Vorrichtung nach einem der Ansprüche 4 bis 8, wobei im Schäumbehälter (1) ein insbesondere höhenverstellbarer Füllhöhensensor bzw. -schalter (21) vorgesehen ist.

10. Vorrichtung nach einem der Ansprüche 4 bis 9, wobei im Schäumbehälter (1) eine Rühreinrichtung (20) integriert ist.

## Claims

1. A process for multifoaming expandable polystyrene (EPS) to foam particles of low density with a prefoaming being effected in a first step and an afterfoaming (1) of already prefoamed material being effected in at least one further step, wherein discontinuous or batchwise foaming is carried out as final afterfoaming (1) using the remainder of a blowing agent and final afterfoaming (1) is carried out by introducing water vapor, optionally under the addition of air, at a pressure of 1 bar to 7 bars, in particular about 1.05 bar to 2 bars, at a temperature of from 75°C to 160°C, in particular about 100°C, wherein the prefoamed material is introduced into a vessel for afterfoaming, using a closed-loop fluid conveying circuit (9, 15, 24) and wherein offgas drawn off the final afterfoaming stage (1) is at least partially recycled for conveying the prefoamed material into the afterfoaming stage (1).

2. A process according to claim 1, wherein the prefoamed material is subjected to a weighing procedure (5) prior to being introduced into the final afterfoaming stage.

3. A process according to claim 1 or 2, wherein the material during afterfoaming (1) is stirred under the continuous supply of water vapor.

4. A device for performing the process according to any of the claims 1 to 3, comprising at least one storage or supply means (3) and a foaming vessel (1) for a discontinuous or batchwise afterfoaming of the prefoamed expandable polystyrene, wherein a recycling duct (24) for offgas drawn off the foaming vessel (1) is connected to the foaming vessel (1) for an at least partial recirculation of the offgas to the foaming vessel (1) via the blower (11) while forming a closed-loop fluid conveying circuit for the introduction of the prefoamed material.

5. A device according to claim 4, wherein the foaming vessel (1), besides a feed opening (18) known per se for water vapor, a discharge duct (17) for the foamed material and at least one offgas exhaust opening (15, 29), comprises a tangentially connected blow-in opening (13) for the prefoamed material and a sieve (14) in the upper part of the foaming vessel (1).

6. A device according to claim 4 or 5, wherein a weighing means (5) for the prefoamed material is integrated in the storage or supply means (3).

7. A device according to claim 4, 5 or 6, wherein a cellular wheel sluice or feeder (8) is connected to the storage or supply means (3, 4, 5) and a blower (11) is provided for introducing the prefoamed material into the foaming vessel (1).

8. A device according to any of the claims 4 to 7, wherein an offgas purification plant (32) is provided in a discharge duct (29) in a manner known per se.

9. A device according to any of the claims 4 to 8, wherein a filling level sensor or switch (21), which, in particular, is adjustable in height, is provided in the foaming vessel (1).

10. A device according to any of the claims 4 to 9, wherein a stirring means (20) is integrated in the foaming vessel (1).

## Revendications

1. Procédé de moussage en plusieurs étapes de polystyrène expansible (EPS) en des particules de mousse de basse densité en vrac, dans lequel une pré-expansion s'effectue dans une première étape et, dans au moins une autre étape, s'effectue un moussage ultérieur (1) de matériau déjà pré-expansé, moyennant quoi un moussage discontinu, respectivement par charges, est effectué comme moussage ultérieur final (1) en exploitant un reste de porophore, et le moussage ultérieur final (1) est effectué par introduction de vapeur d'eau, le cas échéant avec apport d'air, sous une pression de 1 bar à 7 bar, en particulier d'environ 1,05 bar à 2 bar, à une température de 75°C à 160°C, en particulier d'environ 100°C, dans lequel le matériau pré-expansé est introduit dans un récipient (1) pour le moussage ultérieur moyennant l'utilisation d'un circuit fermé de transport à l'état fluidisé (9, 15, 24), et dans lequel les gaz de sortie extraits de l'étape de moussage ultérieur final (1) sont recyclés au moins en partie pour le transport du matériau pré-expansé dans l'étape de moussage ultérieur (1).

2. Procédé selon la revendication 1, dans lequel le matériau pré-expansé est soumis à un procédé de pesage (5) avant l'introduction dans le moussage ultérieur final.

3. Procédé selon la revendication 1 ou 2, dans lequel le matériau est agité pendant le moussage ultérieur (1) lors d'une amenée continue de vapeur d'eau.

4. Dispositif pour la mise en oeuvre du procédé selon l'une quelconque des revendications 1 à 3, comprenant au moins un dispositif de réserve, respectivement d'alimentation (3) et un récipient de moussage (1) pour un moussage ultérieur discontinu, respectivement par charges, du polystyrène expansible pré-expansé, dans lequel une conduite de recyclage (24) pour les gaz de sortie extraits du récipient de moussage (1) est raccordée sur le récipient de moussage (1) pour un recyclage au moins partiel des gaz de sortie vers le récipient de moussage (1) via la soufflante (11), moyennant la formation d'un circuit fermé de transport à l'état fluidisé pour l'introduction du matériau pré-expansé.

5. Dispositif selon la revendication 4, dans lequel le récipient de moussage (1), à côté d'une ouverture d'amenée (18) pour la vapeur d'eau connue en soi, d'une conduite de déchargement (17) pour le matériau expansé et d'au moins une ouverture d'échappement (15, 29) pour les gaz sortants, est configuré avec une tubulure de soufflage d'entrée raccordée tangentiellement (13) pour le matériau pré-expansé et avec un tamis (14) dans la partie supérieure du récipient de moussage (1).

6. Dispositif selon la revendication 4 ou 5, dans lequel un dispositif de pesage (5) pour le matériau pré-expansé est intégré dans le dispositif de réserve, respectivement d'alimentation (3).

7. Dispositif selon la revendication 4, 5 ou 6, dans lequel un sas à roue cellulaire (8) est raccordé sur le dispositif de réserve, respectivement d'alimentation (3, 4, 5), et dans lequel une soufflante (11) est prévue pour l'introduction du matériau pré-expansé dans le récipient de moussage (1).

8. Dispositif selon l'une quelconque des revendications 4 à 7, dans lequel une installation d'épuration des gaz sortants (32) est prévue d'une façon connue en soi dans une conduite d'échappement (29).

9. Dispositif selon l'une quelconque des revendications 4 à 8, dans lequel un capteur, respectivement un interrupteur de hauteur de remplissage (21), en particulier réglable en hauteur, est prévu dans le récipient de moussage (1).

10. Dispositif selon l'une quelconque des revendications 4 à 9, dans lequel un dispositif agitateur (20) est intégré dans le récipient de moussage (1).
